# FASCICULE DE BREVET EUROPEEN

(11) **EP 2 481 668 B1**
(45) Date de publication et mention de la délivrance du brevet: **10.07.2013**
(21) Numéro de dépôt: 12152188.4
(22) Date de dépôt: 23.01.2012
(51) Int. Cl.: B64C 1/26

(54) **Raccordement des cadres de raidissage entre un fuselage d'aéronef et un caisson de voilure**
Verbindung der Versteifungsrahmen zwischen dem Rumpf eines Luftfahrzeugs und einem Fahrwerkskasten
Connection of stiffening frames between an aircraft fuselage and a wing box

(30) Priorité: 28.01.2011 FR 1150678
(43) Date de publication de la demande: 01.08.2012
(73) Titulaire: Airbus Operations (Société par actions simplifiée), 31060 Toulouse (FR)
(72) Inventeur: Cabanac, Jean-Pierre, 31170 Tournefeuille (FR); Colmagro, Jérôme, 31200 Toulouse (FR); Durand, Jean-Marc, 31530 Levignac (FR); Fournie, Ludovic, 31300 Toulouse (FR); Guillemaut, Julien, 28005 Madrid (ES); Loyant, François, 32600 L'Isle Jourdain (FR)
(74) Mandataire: Ilgart, Jean-Christophe

(56) Documents cités:
- FR-A1- 2 873 347
- FR-A1- 2 936 489
- FR-A1- 2 948 099

## Description

### DOMAINE TECHNIQUE

Le sujet de l'invention est le raccordement de cadres de raidissage entre un fuselage et un caisson de voilure d'aéronef.

FR 2 936 489 montre un tel raccordement et divulgue toutes les caractéristiques du préambule de la revendication 1.

Les fuselages d'aéronefs sont munis de raidisseurs longitudinaux appelés lisses et de raidisseurs circonférentiels appelés cadres s'étendant sur des sections transversales de l'aéronef. Les raidisseurs et le fuselage lui-même sont toutefois interrompus à l'endroit du raccordement au caisson de voilure, où on trouve généralement une pièce de raccord à section cruciforme joignant d'une part un panneau d'extrados (supérieur) de l'aile de la voilure et un panneau d'extrados du caisson de voilure qui sont en prolongement, et d'autre part le fuselage et une nervure du caisson de voilure qui sont aussi en prolongement. Comme la nervure doit être raidie tout comme le fuselage, une conception classique consiste à lui attribuer des raidisseurs, dont certaines prolongeant les cadres et sont appelées pieds de cadres internes. De plus, les pieds de cadres internes sont raccordés aux cadres pour assurer la continuité du chemin d'effort, au moyen d'éclisses appelées pieds de cadres externes et qui sont fixées d'une part aux cadres par des boulons de cisaillement, d'autre part aux pieds de cadres internes par des boulons de traction traversant le panneau de caisson de voilure et la pièce de raccord. Une conception similaire, appliquée toutefois au raidissage entre le panneau d'extrados de l'aile et le panneau d'extrados du caisson, est exposée complètement dans le document FR-A-2 873 337.

Les cadres du fuselage sont soumis à des sollicitations diverses (efforts normaux de traction ou compression combinés avec des efforts de flexion) provenant principalement des efforts appliqués à la voilure ainsi que des efforts de pressurisation appliqués au fuselage. La zone de jonction entre les cadres et les pieds de cadre (internes et externes) est souvent dimensionnée en fatigue.

Les risques de rupture en fatigue de la jonction entre les cadres et les pieds de cadres externes ne peuvent pas en pratique être exclus, même quand on prend soin de doter les pieds de cadre d'une forme propice, dépourvue d'irrégularités telles que des angles vifs ou des changements d'épaisseur importants, pas plus qu'en rapprochant les fixations de jonction entre cadres et pieds de cadre, de l'axe neutre des cadres. Si des améliorations de dessin des pieds de cadres externes et de position des boulons de cisaillement ont été proposées pour amoindrir ces inconvénients, le raccordement du fuselage à la nervure reste compliqué et potentiellement critique en fatigue.

Sous une forme générale, l'invention concerne une structure d'aéronef comprenant un fuselage, une nervure prolongeant le fuselage et appartenant à un caisson de voilure, un panneau d'extrados du caisson de voilure se raccordant au fuselage et à la nervure, et des cadres de raidissage du fuselage s'étendant chacun dans une section transversale de l'aéronef, caractérisée en ce que les cadres s'étendent de façon continue à travers des encoches du panneau de caisson de voilure et comportent des extrémités inférieures qui raidissent la nervure.

En devenant continus, les cadres permettent d'éviter le recours à des pieds de cadres externes et à la fragilité mécanique qui leur est associée. Il est à noter que le panneau de caisson de voilure doit alors être entaillé pour laisser passer la section des cadres, mais cet affaiblissement est acceptable, la perte de rigidité du panneau étant de peu de conséquence à l'égard des forces transversales ou verticales qui s'exercent préférentiellement sur lui.

La perte de rigidité serait beaucoup plus préjudiciable si des encoches longitudinales devaient être percées à travers le panneau. Or les cadres traditionnels comprennent en général des parties de talon disposées à leur extrémité libre, et destinées à augmenter leur rigidité et qui sont perpendiculaires à leurs âmes, c'est-à-dire orientées en direction longitudinale. Il est alors préconisé, selon l'invention, que le panneau ne soit pas entaillé à l'endroit des talons, mais que ceux-ci soient interrompus avant de traverser le panneau. La diminution de rigidité est donc reportée sur les cadres plutôt que sur le panneau, ce qui est considéré comme plus acceptable pour la bonne tenue de la structure.

Un autre aspect de l'invention comprend des ferrures appuyées sur le panneau et les cadres, couvrant les encoches afin de rétablir l'étanchéité à travers le panneau. Les ferrures peuvent être des cornières au nombre de quatre pour chacune des encoches, qui comprennent chacune une aile fixée au panneau et une aile fixée au cadre.

Il est alors préconisé que les ferrures contribuent à rétablir la rigidité des cadres en suppléant aux parties de talons à l'endroit où elles sont interrompues, qui correspond précisément à l'emplacement des ferrures. Dans une première modalité de réalisation, les ferrures comprennent, outre une portion principale s'étendant le long de l'encoche, une branche montant le long du cadre jusqu'au talon ; cette branche est alors fixée au cadre. Dans une autre modalité, des éclisses sont fixées aux ferrures et aux cadres, et s'étendant sur les cadres jusqu'aux talons ; et selon une troisième modalité un peu différente de la précédente, les éclisses comprennent deux nervures jointes l'une à l'autre et perpendiculaires entre elles, les nervures étant fixées respectivement à une des ferrures et à un des talons.

L'invention concerne aussi un aéronef pourvu d'une structure conforme à ce qui précède.

L'invention sera maintenant décrite en détail mais de façon seulement illustrative en liaison aux figures, parmi lesquelles :
- la figure 1 représente un agencement connu de cadre avec pied de cadre externe et pied de cadre interne ;
- la figure 2 représente le pied de cadre externe da la figure 1 ;
- la figure 3 représente l'agencement caractéristique de l'invention ;
- la figure 4 représente en isolé le panneau entaillé ;
- la figure 5 représente le cadre ;
- la figure 6 représente les ferrures qui complètent la structure ;
- et les figures 7, 8 et 9 représentent trois réalisations améliorées des ferrures.

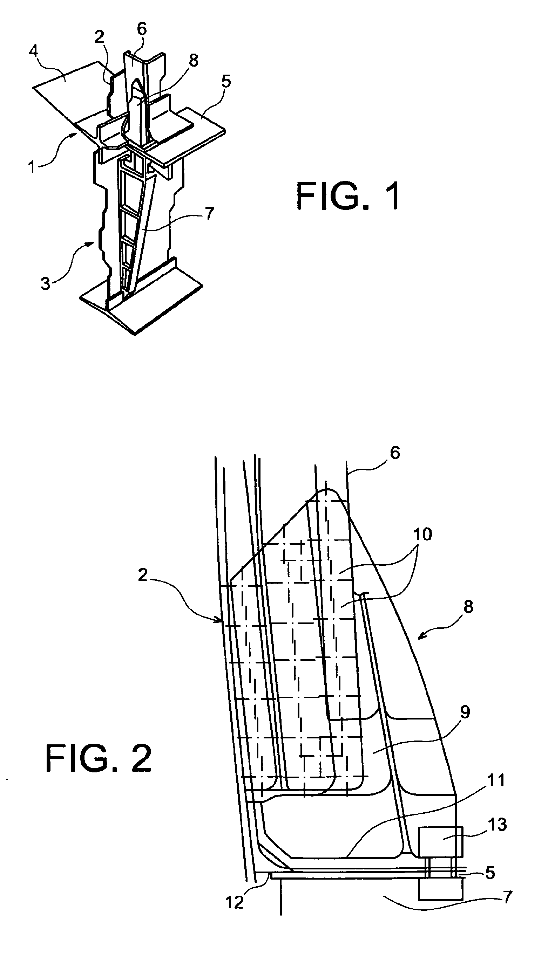

La figure 1 représente une conception classique d'agencement de la partie inférieure des cadres. Un raccord (1) cruciforme est adossé à un panneau de fuselage (2) par son aile supérieure, à une nervure (3) de caisson de voilure par son aile inférieure, à un panneau de voilure (4) par une aile horizontale et à un panneau de caisson de voilure (5) (à l'extrados du caisson) par une aile (12) horizontale opposée. Des cadres (6) raidissant le fuselage (2) sont interrompus à peu de distance du raccord (1). Des pieds de cadres internes (7) prolongeant le cadre (6) raidissent la nervure (3) de l'autre côté du panneau de caisson central (5). Des éclisses appelées des pieds de cadres externes (8), représentées plus en détail à la figure 2, assurent une continuité entre les cadres (6) et les pieds de cadres internes (7). Les pieds de cadres externes (8) comprennent une âme (9) plane appuyée sur le cadre (6) auquel ils sont associés, et qui leur est fixée par des boulons de cisaillement (10). Ils comprennent aussi une base (11) s'appuyant sur l'aile (12) du raccord (1) et qui est pourvue de trous destinés au passage de boulons de traction (13) les liant aux pieds de cadres inférieurs (7) à travers le panneau (5). Ainsi qu'on l'a mentionné, les pieds de cadres externes (8) sont soumis à des concentrations de contraintes qui les rendent vulnérables à la fatigue, et les boulons de cisaillement (10), souvent éloignés de la ligne neutre de flexion des cadres (6), sont vulnérables eux aussi.

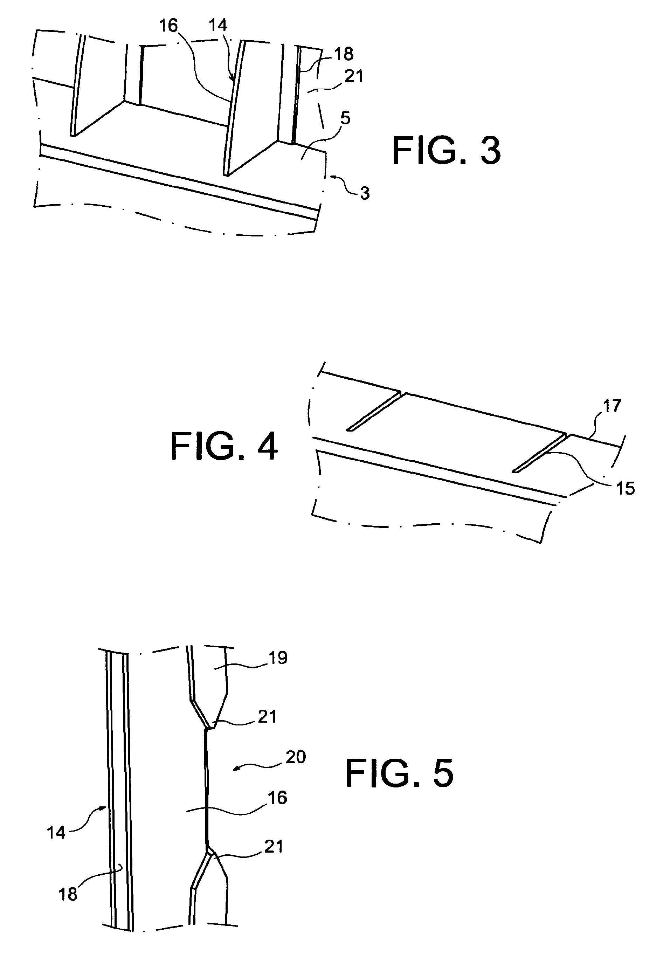

On passe maintenant à la description de l'invention, et d'abord aux figures 3, 4 et 5.

Les cadres, maintenant (14), traversent le panneau de caisson de voilure (5), qui a été pourvu d'encoches (15), orientées dans la direction transversale de l'aéronef pour laisser passer les âmes (16) des cadres (14) orientées dans cette direction, ainsi que de talons d'encoche (17) établis sur le bord du panneau de caisson de voilure (5), joints aux encoches (15) et s'allongeant en direction axiale de l'aéronef, qui sont destinés à livrer passage aux semelles (18) des cadres (14). Ni les encoches (15) ni les talons d'encoches (17) n'affaiblissent beaucoup le panneau (5), qui est soumis essentiellement à des efforts dans la direction verticale et dans la direction transversale. Le raccord (1) traditionnel à section cruciforme peut être maintenu à condition d'être lui-même traversé d'encoches semblables. Il pourrait être aussi divisé en tronçons s'étendant entre deux cadres (14). Et bien qu'il soit d'emploi classique, il n'est pas indispensable et il pourrait être supprimé, le fuselage (2) et la nervure (3) étant alors d'un seul tenant et les panneaux de voilure et de caisson de voilure (4 et 5) étant fixés directement à la nervure étendue ainsi constituée.

Les cadres (14) sont avantageusement pourvus d'un talon (19) à leur extrémité libre, opposée à la semelle (18), pour accroître leur rigidité. Il serait toutefois désavantageux de pourvoir le panneau de caisson de voilure (5) d'encoches correspondant à leur endroit ; on ménage plutôt des arrêts de talon (20) à l'endroit du panneau de caisson de voilure (5), et, quand il existe, de l'aile (12). La jonction entre les talons (19) et les arrêts de talon (20) se fait par des extrémités biseautées (21) s'amincissant vers les arrêts de talon (20) de manière progressive autour des âmes (7), ce qui réduit encore les concentrations de contrainte.

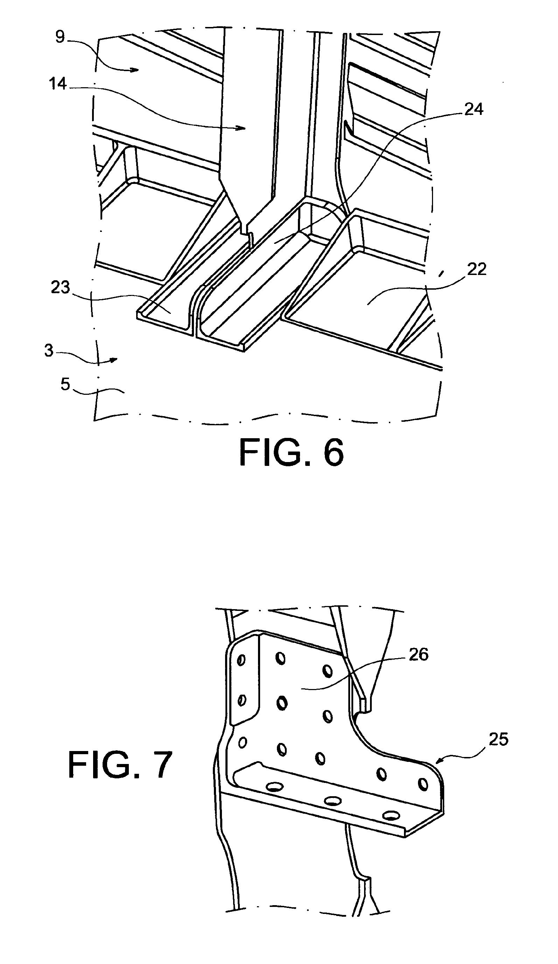

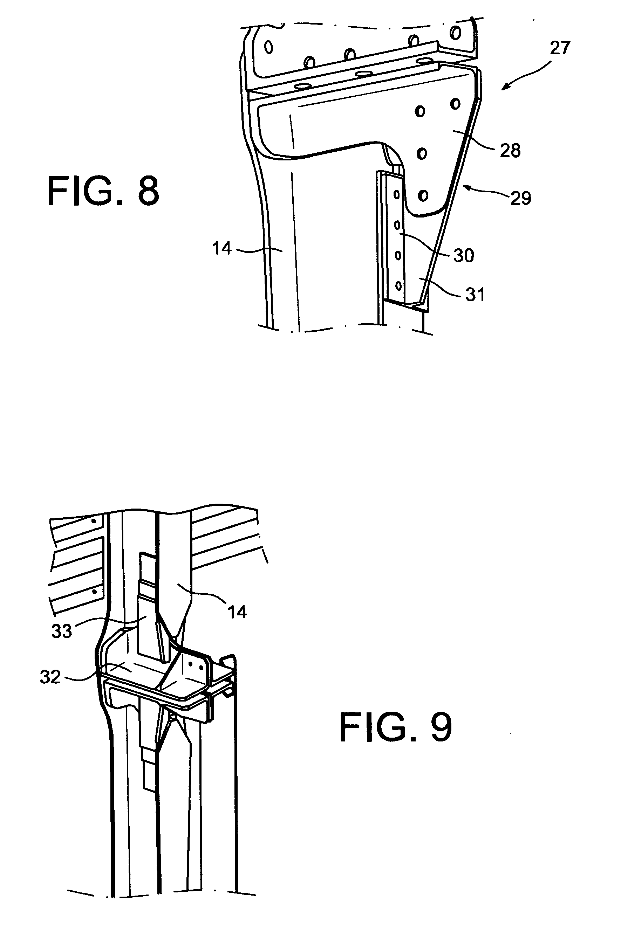

On se reporte à la figure 6. Des ferrures (22, 23) sont disposées à la jonction du fuselage (9) et de la nervure (3) de part et d'autre du panneau de caisson de voilure (5), du côté des cadres (14) comme on l'a représenté et aussi de l'autre côté, pour rendre possible la transmission d'efforts entre les panneaux de caisson central de voilure (5) et de voilure (4) par des liaisons boulonnées non représentées joignant les ferrures opposées à travers le fuselage (2) et la nervure (3). La plupart des ferrures (22) s'étendent entre deux cadres (14) consécutifs ; les autres ferrures, qui s'étendent devant les cadres (14), sont des cornières (23), au nombre de quatre pour chacune des intersections de cadres (14), comprenant chacune une aile verticale (24) s'appuyant sur l'âme (16) du cadre (14) et une aile horizontale (25) s'appuyant sur le panneau de voilure de caisson (5). Les cornières (23) sont boulonnées entre elles à travers l'âme (16) et le panneau de caisson de voilure (5). Elles ont le rôle particulier de couvrir les encoches (15 et 17) pour réaliser l'étanchéité, mais elles peuvent aussi contribuer au renforcement des cadres (14). Quelques réalisations offrant cet avantage sont données aux figures 7, 8 et 9. Dans la première d'entre elles, les cornières, maintenant (25) comprennent, outre une partie principale semblable aux cornières (23), une branche montante (26) s'appuyant sur l'âme du cadre (14) et qui lui est boulonnée, de même qu'à la semelle (18), et s'étend jusqu'au talon (19), ce qui supplée à son interruption. Dans la réalisation de la figure 8, les cornières, maintenant (27), comprennent, outre une partie principale ici aussi semblable aux cornières (23), une extrémité (28) saillant en direction verticale, et la réalisation comprend encore une éclisse (29) comprenant une base (30) appuyée sur le talon du cadre (14) et une nervure (31) appuyée sur la saillie (28). Des boulons non représentés fixent la base (30) au talon et la nervure (31) à la saillie (28). Les efforts passant par le talon (19) peuvent donc dans une certaine mesure traverser les arrêts de talon (20) en passant par les éclisses (29) et les cornières (28) des deux côtés du panneau de caisson de voilure (5). Dans la réalisation de la figure 9, les cornières (32) sont analogues aux cornières (23) de la première réalisation, mais des éclisses, maintenant (33), s'étendent des ailes verticales de ces cornières (32) à des portions de l'âme (16) des cadres (14) qui sont situées au-delà des arrêts de talon (20), en s'étendant le long de l'âme (16). Les éclisses (33) sont fixées à l'aile verticale de la cornière (32) et à l'âme du cadre (14).

## Revendications

1. Structure d'aéronef comprenant un fuselage (2), une nervure (3) prolongeant le fuselage (2) et appartenant à un caisson de voilure, un panneau d'extrados du caisson de voilure (5) se raccordant au fuselage (2) et à la nervure (3), et des cadres (14) de raidissage du fuselage s'étendant chacun dans une section transversale de l'aéronef, **caractérisée en ce que** les cadres s'étendent de façon continue à travers des encoches (15) du panneau de caisson de voilure (5) et comportent des extrémités inférieures qui raidissent la nervure (3).

2. Structure d'aéronef suivant la revendication 1, **caractérisée en ce que** le panneau de caisson de voilure (5) comprend des encoches (15) dirigées vers les sections transversales de l'aéronef pour laisser passage à des âmes (16) des cadres (14), et des talons (17) dirigés en direction axiale de l'aéronef pour livrer passage à des semelles (18) des cadres (14) en appui sur le fuselage (2) et la nervure (3).

3. Structure d'aéronef suivant la revendication 2, **caractérisée en ce que** les cadres comprennent des talons (18) à des extrémités libres des âmes (16), qui sont munis d'interruption (20) à travers le panneau de caisson de voilure (5).

4. Structure d'aéronef suivant la revendication 3, **caractérisée en ce que** les talons (19) se joignent aux arrêts de talons (20) par des extrémités (21) s'amincissant progressivement.

5. Structure d'aéronef suivant l'une quelconque des revendications 1 à 4, **caractérisée en ce qu'**elle comprend des ferrures (23) appuyées sur le panneau de caisson de voilure (5) et sur les cadres (14) en couvrant les encoches.

6. Structure d'aéronef suivant la revendication 5, **caractérisée en ce que** les ferrures (23) sont des cornières, au nombre de quatre pour chacun des cadres (14), lesdites cornières comprenant chacune une aile (23) fixée au panneau de caisson de voilure et une aile (24) fixée au cadre.

7. Structure d'aéronef suivant les revendications 2 et 5, **caractérisée en ce que** les ferrures (25) comprennent une portion principale couvrant l'encoche, et une branche (26) montant le long du cadre (14) jusqu'au talon (19) et fixée au cadre.

8. Structure d'aéronef suivant les revendications 2 et 5, **caractérisée en ce qu'**elle comprend des éclisses (29) comprenant une base et une nervure jointes l'une à l'autre et perpendiculaires entre elles, les bases étant fixées aux talons et les nervures à des extrémités (28) en saillie des ferrures (27).

9. Structure d'aéronef suivant les revendications 2 et 5, **caractérisée en ce qu'**elle comprend des éclisses (33) fixées aux ferrures (32) et aux cadres, et s'étendant sur les cadres jusqu'aux talons.

10. Aéronef pourvu d'une structure conforme à l'une quelconque des revendications précédentes.

## Patentansprüche

1. Luftfahrzeugstruktur, umfassend einen Rumpf (2), eine Rippe (3), die eine Verlängerung des Rumpfs (2) bildet und zu einem Flügelkasten gehört, eine Außenflächenplatte des Flügelkastens (5), die mit dem Rumpf (2) und der Rippe (3) verbunden ist, und Rahmen (14) zur Verstärkung des Rumpfs, die sich jeweils im Querschnitt des Luftfahrzeugs erstrecken, **dadurch gekennzeichnet, dass** sich die Rahmen kontinuierlich durch Einschnitte (15) der Flügelkastenplatte (5) hindurch erstrecken und untere Enden aufweisen, die die Rippe (3) verstärken.

2. Luftfahrzeugstruktur nach Anspruch 1, **dadurch gekennzeichnet, dass** die Flügelkastenplatte (5) Einschnitte (15), die nach Querschnitten des Luftfahrzeugs ausgerichtet sind, um ein Hindurchführen von Kernteilen (16) der Rahmen (14) zu ermöglichen, und Endteile (17), die in axialer Richtung des Luftfahrzeugs ausgerichtet sind, um das Hindurchführen von Fußplatten (18) der Rahmen (14) unter Abstützung an dem Rumpf (2) und der Rippe (3) zu bieten, umfasst.

3. Luftfahrzeugstruktur nach Anspruch 2, **dadurch gekennzeichnet, dass** die Rahmen Endteile (18) an freien Enden der Kernteile (16) aufweisen, die mit einer Unterbrechung (20) über die Flügelkastenplatte (5) ausgestattet sind.

4. Luftfahrzeugstruktur nach Anspruch 3, **dadurch gekennzeichnet, dass** die Endteile (19) über sich fortschreitend verjüngende Enden (21) an die Unterbrechungen der Endteile (20) angebunden sind.

5. Luftfahrzeugstruktur nach einem der Ansprüche 1 bis 4, **dadurch gekennzeichnet, dass** sie Beschläge (23) umfasst, die sich unter Abdecken der Einschnitte an der Flügelkastenplatte (5) und den Rahmen (14) abstützen.

6. Luftfahrzeugstruktur nach Anspruch 5, **dadurch gekennzeichnet, dass** die Beschläge (23) Winkeleisen in einer Zahl von vier für jeden der Rahmen (14) sind, wobei die Winkeleisen jeweils einen an der Flügelkastenplatte befestigten Flügel (23) und einen an dem Rahmen befestigten Flügel (24) aufweisen.

7. Luftfahrzeugstruktur nach den Ansprüchen 2 und 5, **dadurch gekennzeichnet, dass** die Beschläge (25) ein Hauptteil, das den Einschnitt abdeckt, und einen Schenkel (26), der längs dem Rahmen (14) bis zum Endteil (19) angebracht ist und am Rahmen befestigt ist, aufweisen.

8. Luftfahrzeugstruktur nach den Ansprüchen 2 und 5, **dadurch gekennzeichnet, dass** sie Laschen (29) umfasst, die eine Basis und eine Rippe aufweisen, die miteinander verbunden und senkrecht zueinander sind, wobei die Basen an den Endteilen und die Rippen an von den Beschlägen (27) vorstehenden Enden (28) befestigt sind.

9. Luftfahrzeugstruktur nach den Ansprüchen 2 und 5, **dadurch gekennzeichnet, dass** sie Laschen (33) umfasst, die an den Beschlägen (32) und an den Rahmen befestigt sind und sich über die Rahmen bis zu den Endteilen erstrecken.

10. Luftfahrzeug, das mit einer Struktur nach einem der vorhergehenden Ansprüche ausgestattet ist.

## Claims

1. An aircraft structure comprising a fuselage (2), a rib (3) extending the fuselage (2) and belonging to a wing box, an upper panel of the wing box (5) connected to the fuselage (2) and the rib (3), and stiffening frames (14) of the fuselage each extending in a transverse section of the aircraft, **characterized in that** the frames extend continuously through notches (15) in the wing box panel (5) and comprise lower ends that stiffen the rib (3).

2. The aircraft structure according to claim 1, **characterized in that** the wing box panel (5) comprises notches (15) oriented toward the transverse sections of the aircraft to allow the cores (16) of the frames (14) to pass, and heels (17) oriented in the axial direction of the aircraft to free the passage for base plates (18) of the frames (14) bearing on the fuselage (2) and the rib (3).

3. The aircraft structure according to claim 2, **characterized in that** the frames comprise heels (18) at free ends of the cores (16), which are provided with interruptions (20) through the wing box panel (5).

4. The aircraft structure according to claim 3, **characterized in that** the heels (19) are attached to the heel stops (20) by ends (21) that gradually become thinner.

5. The aircraft structure according to any one of claims 1 to 4, **characterized in that** it comprises fittings (23) pressed on the wing box panel (5) and on the frames (14) while covering the notches.

6. The aircraft structure according to claim 5, **characterized in that** the fittings (23) are angles, of which there are four for each of the frames (14), said angles each comprising a wing (23) secured to the wing box panel and a wing (24) secured to the frame.

7. The aircraft structure according to claims 2 and 5, **characterized in that** the fittings (25) comprise a main portion covering the notch, and a branch (26) rising along the frame (14) as far as the heel (19) and secured to the frame.

8. The aircraft structure according to claims 2 and 5, **characterized in that** it comprises splice plates (29) comprising a base and a rib attached to one another and perpendicular to one another, the bases being secured to the heels and the ribs to protruding ends (28) of the fittings (27).

9. The aircraft structure according to claims 2 and 5, **characterized in that** it comprises splice plates (33) secured to the fittings (32) and to the frames, and extending over the frames as far as the heels.

10. An aircraft provided with a structure according to any one of the preceding claims.
